# EUROPEAN PATENT APPLICATION

(11) **EP 2 105 726 A2**
(43) Date of publication of application: **30.09.2009**
(21) Application number: 09155423.8
(22) Date of filing: 17.03.2009
(51) Int. Cl.: G01N 21/35, G06F 17/00

(54) **Automatic and continuous quantitative analysis method and apparatus for multiple components**

(30) Priority: 26.03.2008 JP 2008080620
(71) Applicant: JASCO CORPORATION, Hachioji-shi Tokyo 192-8537 (JP)
(72) Inventor: Jin, Chihiro, Tokyo 192-8537 (JP)
(74) Representative: Henkel, Feiler & Hänzel

(57) **Abstract**

An automatic and continuous quantitative analysis method and apparatus capable of accurately and quickly quantifying the concentration of each component of a plurality of known components having close infrared absorption regions and similar infrared absorption curve shapes, included in a measurement sample. As a quantification wave number for each component of the plurality of components, a wave number at a tip of one absorption peak that overlaps as little as possible with absorption peaks in infrared absorption spectra of the other components, selected as a particular absorption peak for the component, is specified. A step is repeated in which the concentration of each component of the plurality of components having a prescribed highest order in the measurement sample is quantified from an absorbance at an absorption peak corresponding to the quantification wave number of the component having the prescribed highest order, in the spectrum of the measurement sample or a difference spectrum generated immediately before and from a calibration curve generated in advance for the component having the prescribed highest order, and an infrared absorption spectrum for the component having the prescribed highest order alone, where an absorbance at the quantification wave number for the component having the prescribed highest order is set to have the same intensity as the absorbance is subtracted from the spectrum of the measurement sample or the difference spectrum generated immediately before to generate a difference spectrum.

## Description

### RELATED APPLICATIONS

This application claims the priority of Japanese Patent Application No. 2008-080620 filed on March 26, 2008, which are incorporated herein by reference.

### FIELD OF THE INVENTION

The present invention relates to automatic and continuous quantitative analysis methods and apparatuses for analyzing the concentrations of multiple components included in a sample.

### BACKGROUND OF THE INVENTION

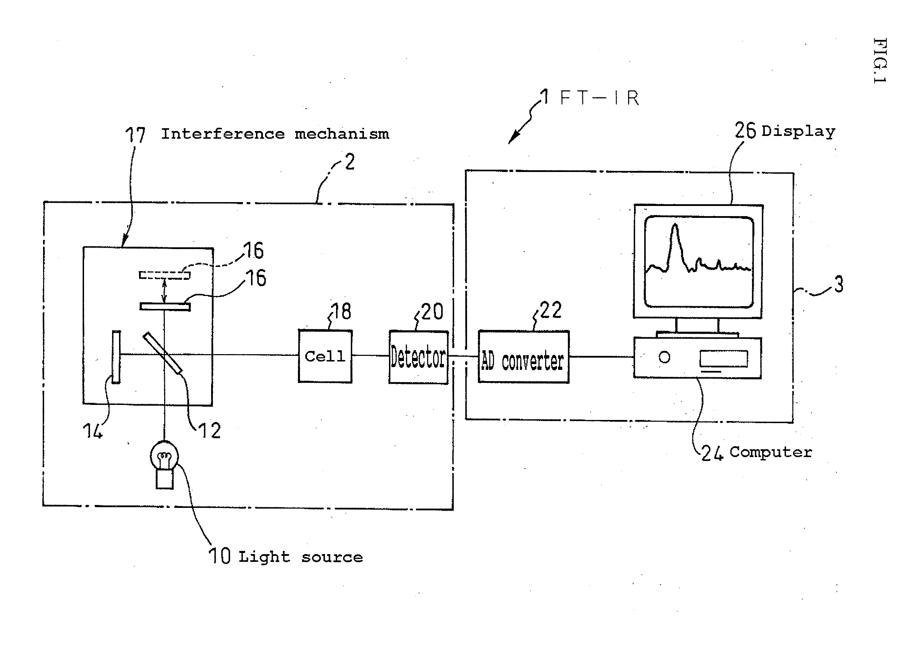

A Fourier transform infrared (FT-IR) spectrophotometer 1 having a structure similar to that outlined in Fig. 1 is generally used for quantitative analysis of multiple components included in a sample. The Fourier transform infrared spectrophotometer 1 includes an analysis section 2 and a data processing section 3. The analysis section 2 includes a light source 10 for emitting an infrared beam; an interference mechanism 17 for generating an interferogram, which includes a beam splitter 12, a fixed mirror 14, and a movable mirror 16; a cell 18 that accommodates a sample and is irradiated with the infrared beam emitted by the light source 10 through the interference mechanism 17; and a detector 20. The data processing section 3 includes an AD converter 22, a computer 24 that includes a Fourier transform unit and a memory, and a display unit 26.

The FT-IR spectrophotometer is superior to a dispersive IR spectrophotometer in that it has a higher sensitivity, a higher resolution, a shorter measurement time, and in addition, because it has the computer 24 for Fourier transformation, it can easily perform various operations with the use of the computer 24, such as correcting the baseline for an obtained infrared absorption spectrum, comparing with the known spectra of many chemical components, and difference-spectrum calculations, by adding various programs.

In quantitative analysis of a chemical component, a measurement sample or a reference sample is accommodated in the cell 18 in the analysis section 2, the cell 18 is irradiated with the infrared beam emitted from the light source 10, and an interferogram of the measurement sample or the reference sample is generated. The interferogram detected by the detector 20 is sent to the processing section 3. It is digitized by the AD converter 22 and sent to the computer 24 for Fourier transformation. The computer 24 applies Fourier transformation to the received data to obtain a power spectrum, calculates the ratio of the power spectrum of the measurement sample to the power spectrum of the reference sample, and converts the ratio with the use of an absorbance scale to obtain an absorption spectrum. Then, multiple components included in the measurement sample are quantitatively analyzed simultaneously according to the absorbance at each of a plurality of wave number points in the absorption spectrum.

To quantitatively analyze multiple components in a measurement sample simultaneously, multivariate analysis methods have been widely employed, such as the classical least squares (CLS), the partial least squares (PLS), and the principal component regression (PCR) (see Japanese Unexamined Patent Application Publication No. 1995-55565, for example).

However, organic compounds absorb light at particular wave number regions according to their chemical structures, and the absorption curve is boarder as the molecular weight is larger. In addition, organic compounds having similar chemical structures and large molecular weights have absorption regions that are close to each other and similar absorption curve shapes. Therefore, it is difficult to accurately separate the absorption spectra of such multiple organic compounds having the absorption regions close to each other and similar absorption curve shapes to obtain highly precise quantitative analysis results. If a Fourier transform infrared spectrophotometer provided with an interference mechanism having a high resolution and a high S/N ratio is used, the separation can be facilitated but, even with it, if the measurement sample includes a plurality of components, a large amount of data is handled in concentration calculations to make the data processing speed lower, which is considered to be inconvenient, especially for continuous analysis (see Japanese Unexamined Patent Applications Publication Nos. 1992-265842 and 1997-101259, for example).

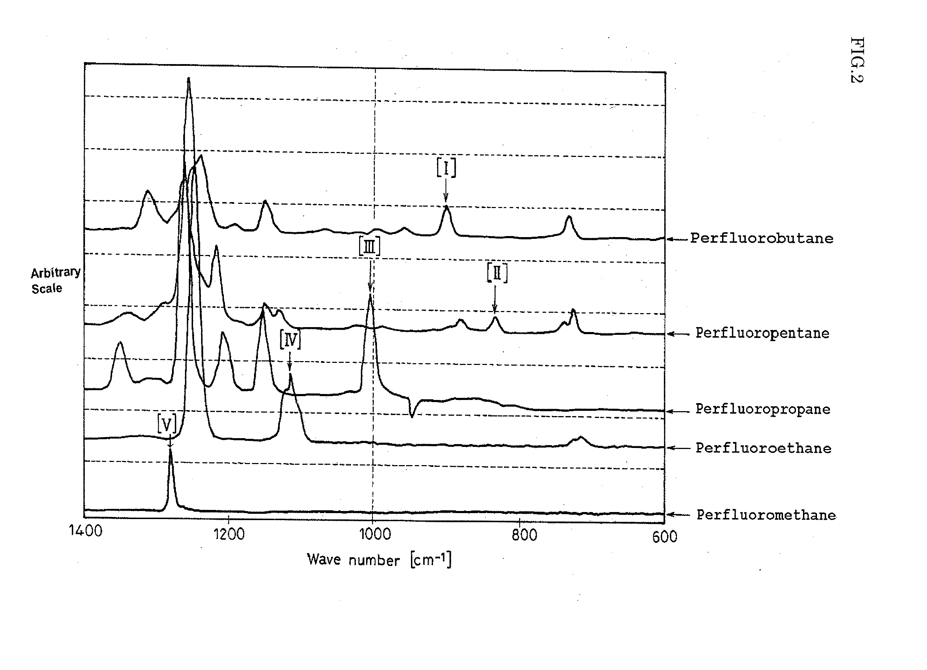

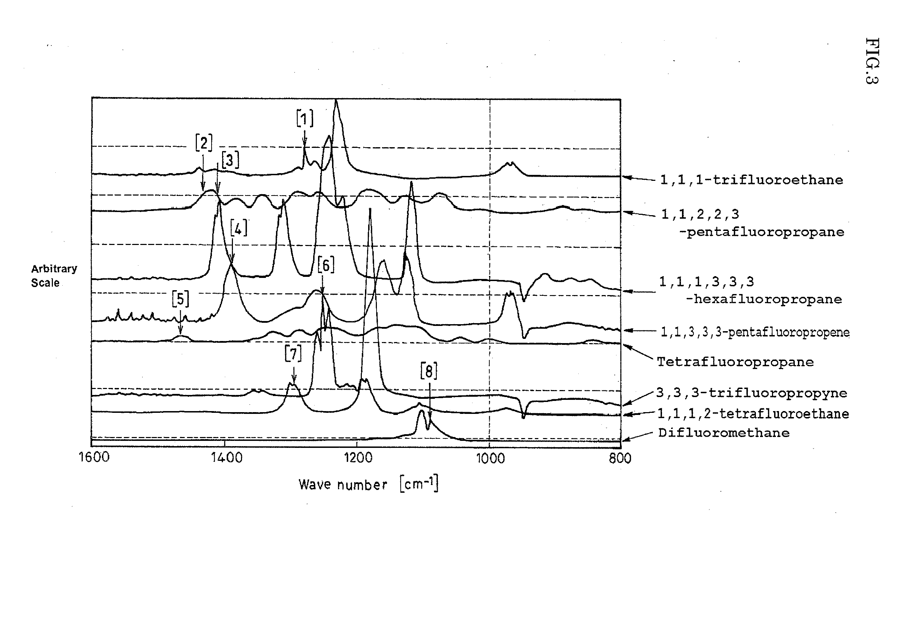

Examples of such organic compounds having the absorption regions close to each other and similar absorption curve shapes include five components of perfluorocarbon (PFC), which is considered to be a global warming gas, and eight components of hydrofluorocarbon (HFC), which is considered to be an ozone-depleting gas. Fig. 2 shows the infrared absorption spectra of the five individual components of perfluorocarbon, and Fig. 3 shows the infrared absorption spectra of the eight individual components of hydrofluorocarbon. In Figs. 2 and 3, the vertical axis indicates the absorbance on an arbitrary scale and the horizontal axis indicates the wave number (cm⁻¹). Numerals enclosed in square brackets in Fig. 2, [I], [II], ..., and [V], and numerals enclosed in square brackets in Fig. 3, [1], [2], ..., and [8], will be described later.

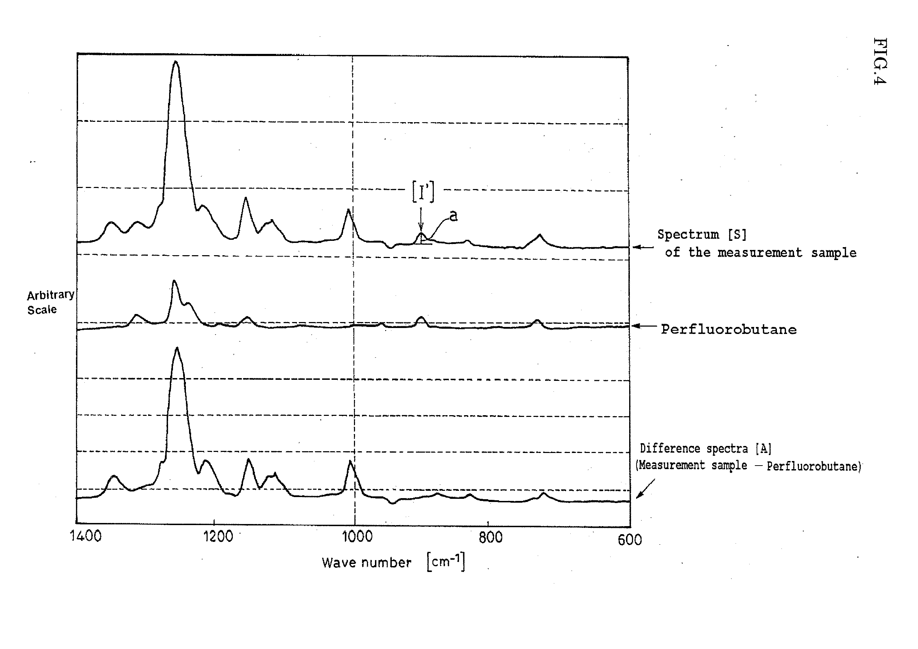

The five components of perfluorocarbon shown in Fig. 2 are similar and have high absorption peaks in a wave number range from 1200 to 1300 cm⁻¹. If the components are quantitatively analyzed using their high absorption peaks, highly precise analysis values cannot be obtained. In addition, perfluoromethane has only one absorption peak at a wave number of 1280 cm⁻¹ in the infrared absorption spectrum, and its peak is low. Therefore, the peak is hidden by the high absorption peaks of the other components in the absorption spectrum [S] of a measurement sample having a combination of the five components, shown at the upper part of Fig. 4 (described later), making it impossible for the conventional multivariate analysis to quantitatively analyze perfluoromethane and the other components simultaneously.

Also among the eight components of hydrofluorocarbon shown in Fig. 3, since 1,1,1-trifluoroethane, 1,1,1,3,3,3-hexafluoropropane, 1,1,3,3,3-pentafluoropropane, and 3,3,3-trifluoropropyne have high absorption peaks in a wave number range from 1200 to 1400 cm⁻¹, if the conventional multivariate analysis is used to quantitatively and simultaneously analyze a measurement sample that includes a combination of these eight components, a large amount of data is handled in quantitative analysis to reduce the data processing speed, making it impossible to perform continuous quantification. In addition, compared with perfluorocarbon shown in Fig. 2, it is more difficult to quantify the components included in the measurement sample with high precision.

### SUMMARY OF THE INVENTION

The present invention has been made in view of the foregoing issues. Accordingly, a first object of the present invention is to provide a quantitative analysis method and apparatus capable of accurately measuring the concentration of each of a plurality of components included in a measurement sample, which components have close absorption regions and similar absorption curve shapes.

A second object of the present invention is to provide a quantitative analysis method and apparatus capable of measuring the concentration of a particular component in a plurality of components included in a measurement sample even if the particular component has such a low concentration that the absorption peak of the particular component is not observed in an infrared absorption spectrum of the measurement sample.

A third object of the present invention is to provide a quantitative analysis method and apparatus capable of automatically and continuously quantifying the concentration of each of a plurality of components included in a measurement sample, that is, quantifying the composition of the sample, within a short period.

The foregoing objects are achieved in one aspect of the present invention through the provision of an automatic and continuous quantitative analysis method for automatically and continuously quantifying the concentration of each component of a plurality of known components constituting a measurement sample in a process of sequentially subtracting an infrared absorption spectrum of each component alone of the plurality of components from an infrared absorption spectrum [S] of the measurement sample to generate difference spectra corresponding to the number of remaining components of the plurality of components. The automatic and continuous quantitative analysis method includes a step of specifying, as a quantification wave number for each component of the plurality of components, a wave number at a tip of one absorption peak that overlaps as little as possible with absorption peaks in infrared absorption spectra of the other components, freely selected as a particular absorption peak for the component, of freely specifying an order for the plurality of components in which the corresponding infrared absorption spectra are subtracted to generate the difference spectra, and of generating a calibration curve for the component for the absorbance and concentration at the quantification wave number; a step of quantifying the concentration of a component of the plurality of components having the highest order in the measurement sample from an absorbance *a* at an absorption peak corresponding to the quantification wave number of the component having the highest order, in the infrared absorption spectrum [S] of the measurement sample and from the calibration curve for the component having the highest order, and of subtracting from the infrared absorption spectrum [S] of the measurement sample an infrared absorption spectrum for the component having the highest order alone, where an absorbance at the quantification wave number for the component having the highest order is set to have the same intensity as the absorbance *a*, to generate a difference spectrum [A]; a step of quantifying the concentration of a component of the plurality of components having the second highest order in the measurement sample from an absorbance *b* at an absorption peak corresponding to the quantification wave number of the component having the second highest order, in the difference spectrum [A] and from the calibration curve for the component having the second highest order, and of subtracting from the difference spectrum [A] an infrared absorption spectrum for the component having the second highest order alone, where an absorbance at the quantification wave number for the component having the second highest order is set to have the same intensity as the absorbance b, to generate a difference spectrum [B]; a step of repeating, in the same manner as that described above, the quantification of the concentration of a component of the plurality of components having a prescribed highest order in the measurement sample from an absorbance *nᵢ* at an absorption peak corresponding to the quantification wave number of the component having the prescribed highest order, in the difference spectrum [Nᵢ₊₁] generated in the step immediately before and from the calibration curve for the component having the prescribed highest order, and the subtraction, from the difference spectrum [Nᵢ₊₁], of an infrared absorption spectrum for the component having the prescribed highest order alone, where an absorbance at the quantification wave number for the component having the prescribed highest order is set to have the same intensity as the absorbance *nᵢ*, to generate the next difference spectrum [Nᵢ]; and a step of quantifying the concentration of a component of the plurality of components having the lowest order in the measurement sample from an absorbance w at an absorption peak corresponding to the quantification wave number of the component having the lowest order, in a last remaining difference spectrum and from the calibration curve for the component having the lowest order.

The foregoing objects are achieved in another aspect of the present invention through the provision of a Fourier transform infrared spectrophotometer capable of automatically and continuously quantifying the concentration of each component of a plurality of known components included in a measurement sample. The Fourier transform infrared spectrophotometer includes an analysis section and a data processing section, the analysis section including a light source for emitting an infrared beam; an interference mechanism that includes a beam splitter, a fixed mirror, and a movable mirror; a cell that accommodates the measurement sample or a reference sample and is irradiated with the infrared beam emitted by the light source through the interference mechanism; and a detector; the data processing section including an AD converter; a computer that includes a Fourier transform unit and a memory; and a display unit, wherein, before quantifying the concentration of each component of the plurality of components, the memory of the computer stores in advance at least an infrared absorption spectrum for each component alone of the plurality of components; a quantification wave number for each component of the plurality of components, specified based on a wave number at a tip of one absorption peak that overlaps as little as possible with absorption peaks in infrared absorption spectra of the other components, freely selected as a particular absorption peak for the component; an order freely specified for the plurality of components in which the corresponding infrared absorption spectra are sequentially subtracted from an infrared absorption spectrum [S] of the measurement sample to generate difference spectra corresponding to the number of remaining components of the plurality of components; and a calibration curve for each component of the plurality of components for the absorbance and concentration at the quantification wave number; and a program is installed which continuously executes: a step of quantifying the concentration of a component of the plurality of components having the highest order in the measurement sample from an absorbance *a* at an absorption peak corresponding to the quantification wave number of the component having the highest order, in the infrared absorption spectrum [S] of the measurement sample and from the calibration curve for the component having the highest order, and of subtracting from the infrared absorption spectrum [S] of the measurement sample an infrared absorption spectrum for the component having the highest order alone, where an absorbance at the quantification wave number for the component having the highest order is set to have the same intensity as the absorbance *a*, to generate a difference spectrum [A]; a step of quantifying the concentration of a component of the plurality of components having the second highest order in the measurement sample from an absorbance *b* at an absorption peak corresponding to the quantification wave number of the component having the second highest order, in the difference spectrum [A] and from the calibration curve for the component having the second highest order, and of subtracting from the difference spectrum [A] an infrared absorption spectrum for the component having the second highest order alone, where an absorbance at the quantification wave number for the component having the second highest order is set to have the same intensity as the absorbance b, to generate a difference spectrum [B]; a step of repeating, in the same manner as that described above, the quantification of the concentration of a component of the plurality of components having a prescribed highest order in the measurement sample from an absorbance *nᵢ* at an absorption peak corresponding to the quantification wave number of the component having the prescribed highest order, in the difference spectrum [Nᵢ₊₁] generated in the step immediately before and from the calibration curve for the component having the prescribed highest order, and the subtraction, from the difference spectrum [Nᵢ₊₁], of an infrared absorption spectrum for the component having the prescribed highest order alone, where an absorbance at the quantification wave number for the component having the prescribed highest order is set to have the same intensity as the absorbance *nᵢ*, to generate a difference spectrum [Nᵢ]; and a step of quantifying the concentration of a component of the plurality of components having the lowest order in the measurement sample from an absorbance w at an absorption peak corresponding to the quantification wave number of the component having the lowest order, in a last remaining difference spectrum and from the calibration curve for the component having the lowest order.

To perform quantitative analysis of a measurement sample that includes a plurality of known components by the automatic and continuous quantitative analysis method according to the present invention, described above, a step of specifying, as a quantification wave number for each component of the plurality of components, a wave number at a tip of one absorption peak that overlaps as little as possible with absorption peaks in infrared absorption spectra of the other components, freely selected as a particular absorption peak for the component, of specifying an order for the plurality of components in which the corresponding infrared absorption spectra are subtracted to generate the difference spectra, and of generating a calibration curve for the component for the absorbance and concentration at the quantification wave number is performed; and a step of repeating the quantification of the concentration of a component of the plurality of components having a prescribed highest order in the measurement sample from an absorbance at an absorption peak corresponding to the quantification wave number of the component having the prescribed highest order, in the infrared absorption spectrum of the measurement sample or the difference spectrum generated in the step immediately before and from the calibration curve for the component having the prescribed highest order, and the subtraction, from the infrared absorption spectrum of the measurement sample or the difference spectrum generated in the step immediately before, of an infrared absorption spectrum for the component having the prescribed highest order alone, where an absorbance at the quantification wave number for the component having the prescribed highest order is set to have the same intensity as the absorbance in the infrared absorption spectrum of the measurement sample or the difference spectrum, to generate the next difference spectrum is performed to quantify each component of the plurality of components included in the measurement sample. Therefore, the concentrations of the plurality of components can be automatically and continuously quantified, and the concentration of a component having an absorption peak that is hidden in the infrared absorption spectrum of the measurement sample can also be quantified, which are advantages not achieved by quantitative analysis using the conventional multivariate analysis method.

To perform quantitative analysis of a measurement sample that includes a plurality of known components using the Fourier transform infrared spectrophotometer according to the present invention, described above, a step of repeating the quantification of the concentration of a component of the plurality of components having a prescribed highest order in the measurement sample from an absorbance at an absorption peak corresponding to the quantification wave number of the component having the prescribed highest order, in the infrared absorption spectrum of the measurement sample or the difference spectrum generated in the step immediately before and from the calibration curve for the component having the prescribed highest order for the absorbance and concentration at the quantification wave number for the component, the calibration curve being generated and stored in advance, and the subtraction, from the infrared absorption spectrum of the measurement sample or the difference spectrum generated in the step immediately before, of an infrared absorption spectrum for the component having the prescribed highest order alone, where an absorbance at the quantification wave number for the component having the prescribed highest order is set to have the same intensity as the absorbance in the infrared absorption spectrum of the measurement sample or the difference spectrum, to generate the next difference spectrum is performed according to the given program. Therefore, the concentrations of the plurality of components in the measurement sample can be automatically and continuously quantified, and the concentration of a component having an absorption peak that is hidden in the infrared absorption spectrum of the measurement sample can also be quantified, which are advantages not achieved by a Fourier transform infrared spectrophotometer using the conventional multivariate analysis method.

### BRIEF DESCRIPTION OF THE DRAWINGS

Fig. 1 is an outlined view of the structure of a Fourier transform infrared spectrophotometer used in the present invention.

Fig. 2 is a graph of infrared absorption spectra of five individual components of perfluorocarbon with selected particular absorption peaks.

Fig. 3 is a graph of infrared absorption spectra of eight individual components of hydrofluorocarbon with selected particular absorption peaks.

Fig. 4 is a graph of infrared absorption spectra, which shows operations of quantifying the concentration of each of the five components included in perfluorocarbon used as a measurement sample and generating a difference spectrum, and which corresponds to step 1 described in an embodiment of the present invention.

Fig. 5 is a graph corresponding to step 2 described in the embodiment, following step 1 shown in Fig. 4.

Fig. 6 is a graph corresponding to step 3 described in the embodiment, following step 2 shown in Fig. 5.

Fig. 7 is a graph corresponding to steps 4 and 5 described in the embodiment, following step 3 shown in Fig. 6.

### DESCRIPTION OF THE PREFERRED EMBODIMENTS

Fig. 2 is a graph of infrared absorption spectra of five individual components of perfluorocarbon, having predetermined concentrations. The vertical axis indicates the absorbance on an arbitrary scale and the horizontal axis indicates the wave number (cm⁻¹). Among many absorption peaks existing in the infrared absorption spectra of the five individual components, one absorption peak is selected for each component as a particular absorption peak, which overlaps with the absorption peaks of the other components as little as possible. The particular absorption peak can be any absorption peak so long as it overlaps with the other peaks as little as possible. The particular absorption peak is not limited by its absorbance magnitude or its wave number range. In Fig. 2, one absorption peak selected for each of the five individual components in their infrared absorption spectra is indicated by an arrow as particular absorption peaks [I], [II], [III], [IV], and [V], but they are merely selected examples and other absorption peaks may be selected as particular absorption peaks.

The wave numbers corresponding to the particular absorption peaks [I] to [V] are regarded as wave numbers used to quantify the components, that is, quantification wave numbers. More specifically, in Fig. 2, the quantification wave number for perfluorobutane is set to the wave number of the particular absorption peak [I], 901 cm⁻¹; the quantification wave number for perfluoropentane is set to the wave number of the particular absorption peak [II], 834 cm⁻¹; the quantification wave number for perfluoropropane is set to the wave number of the particular absorption peak [III], 1006 cm⁻¹; the quantification wave number for perfluoroethane is set to the wave number of the particular absorption peak [IV], 1145 cm⁻¹; and the quantification wave number for perfluoromethane is set to the wave number of the particular absorption peak [V], 1282 cm⁻¹.

As will be described later, the numerals enclosed by square brackets, [I] to [V], indicate the order in which the infrared absorption spectrum of each component is sequentially subtracted first from the infrared absorption spectrum of the measurement sample, used as a starting spectrum, to generate difference spectra each having the number of components reduced by one. The order can be set as desired, but it is desirable that components having selected particular absorption peaks that are hidden in the infrared absorption spectrum of the measurement sample be assigned lower order numbers (be subtracted later).

A quantitative analysis method and apparatus for quantifying the concentration of each component according to an embodiment of the present invention will be described below with reference to the drawings.
Perfluorocarbon having a combination of the five components shown in Fig. 2 is used as a measurement sample.

### [Preparation before quantitative analysis]

First, the infrared absorption spectrum of each of the five components shown in Fig. 2; the quantification wave number for each of the components, specified by the selected particular absorption peaks [I] to [V] selected for the components shown in Fig. 2; the order in which the infrared absorption spectrum of each component is sequentially subtracted first from the infrared absorption spectrum of the measurement sample to generate difference spectra each corresponding to the number of components included therein; and a calibration curve for each component generated in advance for the absorbance and concentration at the quantification wave number are stored in the memory of the computer 24 in the Fourier transform infrared spectrophotometer 1 shown in Fig. 1, using a program installed therein.

[Step 1]
Then, the concentration of each component is quantified for the measurement sample having a combination of the five components. Fig. 4 shows, at its upper part, an infrared absorption spectrum [S] of the measurement sample, measured by the Fourier transform infrared spectrophotometer. In Fig. 4, the horizontal axis indicates the wave number and the vertical axis indicates the absorbance in the same way as in Fig. 2, but the absorbance scale is different from that used in Fig. 2. An absorption peak [I'] indicated by an arrow in the spectrum [S] of the measurement sample corresponds to the absorption peak [I] of perfluorobutane at quantification wave number 901 cm⁻¹ shown in Fig. 2. The concentration of perfluorobutane in the measurement sample is quantified from the absorbance *a* at the absorption peak [I'] and the calibration curve for perfluorobutane for the absorbance and concentration at a wave number of 901 cm⁻¹, stored in the memory of the computer 24.

The absorbance at an absorption peak can be indicated by the integrated intensity of the absorption peak or by the peak intensity (height).
For each of the above two methods, the baseline can be specified by a slanted line connecting the rising point and the falling point of the peak, by a comparatively gentle slanted line connecting the rising point and the falling point in a comparatively wide wave number range that includes the peak and neighbor peaks, or by an almost horizontal line connecting the rising point and the falling point in an even wider wave number range. The method to indicate the absorbance and to specify the baseline is not limited so long as it is the same as the method used to generate the calibration line described above. In other words, the computer should be instructed by the program to use the same method to generate the calibration line and also to generate difference spectra sequentially from the spectrum of the measurement sample. In Fig. 4, the rising point and the falling point of the absorption peak [I'] alone are connected to serve as the baseline, and the height from the baseline to the peak is used as the absorbance *a*. This method is also used in the following description.

Then, the spectrum of perfluorobutane, which has an order number of 1, is subtracted from the spectrum [S] of the measurement sample. The infrared absorption spectrum of perfluorobutane alone is shown at the middle of Fig. 4 where the absorbance of perfluorobutane at the quantification wave number 901 cm⁻¹ is set to have the same intensity as the absorbance *a* of the absorption peak [I']. This spectrum is generated by the computer 24 from the infrared absorption spectrum of perfluorobutane alone, which is stored in the memory of the computer 24.

By using the computer 24 to subtract the spectrum of perfluorobutane with the matched absorbance, shown at the middle of Fig. 4, from the spectrum [S] of the measurement sample, a difference spectrum [A] shown at the lower part of Fig. 4, which is the difference spectrum [A] for the measurement sample minus perfluorobutane, is generated.

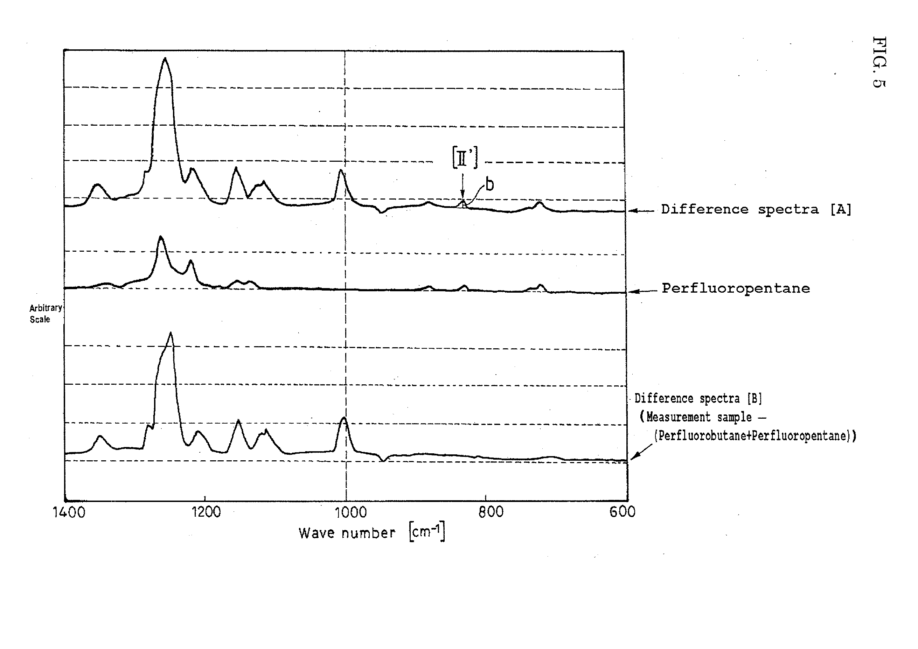

[Step 2]
The difference spectrum [A] shown in Fig. 4 is also shown at the upper part of Fig. 5. The absorption peak [II'] indicated by an arrow in the difference spectrum [A] corresponds to the absorption peak [II] of the spectrum of perfluoropentane at the quantification wave number 834 cm⁻¹, shown in Fig. 2. The concentration of perfluoropentane in the measurement sample is quantified from the absorbance *b* at the absorption peak [II'] and the calibration curve for perfluoropentane for the absorbance and concentration at a wave number of 834 cm⁻¹, stored in the memory of the computer 24.

Then, the spectrum of perfluoropentane, which has an order number of 2, is subtracted from the difference spectrum [A] shown in Fig. 5. The infrared absorption spectrum of perfluoropentane alone is shown at the middle of Fig. 5 where the absorbance of perfluoropentane at the quantification wave number 834 cm⁻¹ is set to have the same intensity as the absorbance b of the absorption peak [II']. This spectrum is generated by the computer 24 from the infrared absorption spectrum of perfluoropentane alone, which is stored in the memory of the computer 24.

By using the computer 24 to subtract the spectrum of perfluoropentane with the matched absorbance, shown at the middle of Fig. 5, from the difference spectrum [A], shown at the upper part of Fig. 5, a difference spectrum [B] shown at the lower part of Fig. 5, which is the difference spectrum [B] for the measurement sample minus (perfluorobutane plus perfluoropentane), is generated.

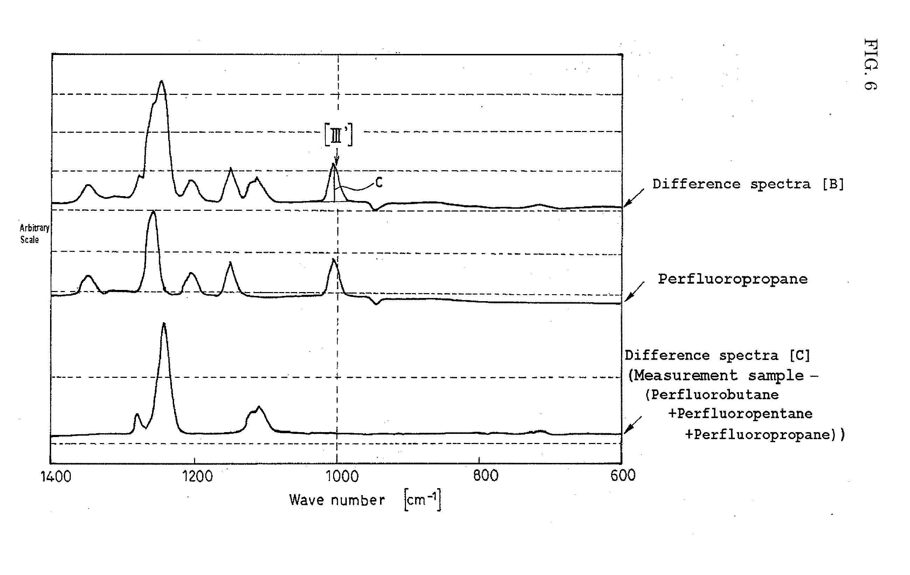

[Step 3]
The difference spectrum [B] shown in Fig. 5 is also shown at the upper part of Fig. 6. The absorption peak [III'] indicated by an arrow in the difference spectrum [B] corresponds to the absorption peak [III] of the spectrum of perfluoropropane at the quantification wave number 1006 cm⁻¹, shown in Fig. 2. The concentration of perfluoropropane in the measurement sample is quantified from the absorbance c at the absorption peak [III'] and the calibration curve for perfluoropropane for the absorbance and concentration at a wave number of 1006 cm⁻¹, stored in the memory of the computer 24.

Then, the spectrum of perfluoropropane, which has an order number of 3, is subtracted from the difference spectrum [B] shown in Fig. 6. The infrared absorption spectrum of perfluoropropane alone is shown at the middle of Fig. 6 where the absorbance of perfluoropropane at the quantification wave number 1006 cm⁻¹ is set to have the same intensity as the absorbance c of the absorption peak [III']. This spectrum is generated by the computer 24 from the infrared absorption spectrum of perfluoropropane alone, which is stored in the memory of the computer 24.

By using the computer 24 to subtract the spectrum of perfluoropropane with the matched absorbance, shown at the middle of Fig. 6, from the difference spectrum [B], shown at the upper part of Fig. 6, a difference spectrum [C] shown at the lower part of Fig. 6, which is the difference spectrum [C] for the measurement sample minus (perfluorobutane plus perfluoropentane plus perfluoropropane), is generated.

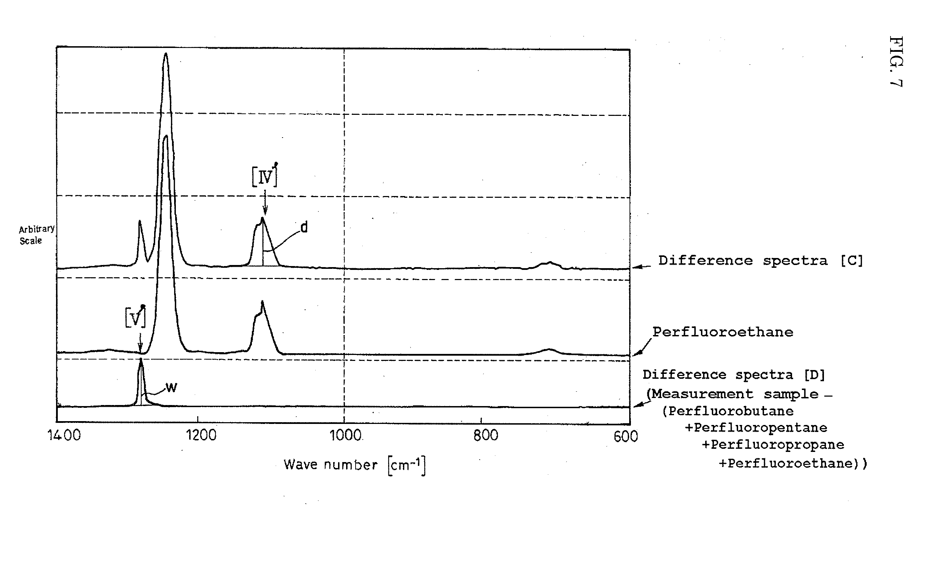

[Step 4]
The difference spectrum [C] shown in Fig. 6 is also shown at the upper part of Fig. 7. The absorption peak [IV'] indicated by an arrow in the difference spectrum [C] corresponds to the absorption peak [IV] of the spectrum of perfluoroethane at the quantification wave number 1114 cm⁻¹, shown in Fig. 2. The concentration of perfluoroethane in the measurement sample is quantified from the absorbance *d* at the absorption peak [IV'] and the calibration curve for perfluoroethane for the absorbance and concentration at a wave number of 1114 cm⁻¹, stored in the memory of the computer 24.

Then, the spectrum of perfluoroethane, which has an order number of 4, is subtracted from the difference spectrum [C] shown in Fig. 7. The infrared absorption spectrum of perfluoroethane alone is shown at the middle of Fig. 7 where the absorbance of perfluoroethane at the quantification wave number 1114 cm⁻¹ is set to have the same intensity as the absorbance d of the absorption peak [IV']. This spectrum is generated by the computer 24 from the infrared absorption spectrum of perfluoroethane alone, which is stored in the memory of the computer 24.

By using the computer 24 to subtract the spectrum of perfluoroethane with the matched absorbance, shown at the middle of Fig. 7, from the difference spectrum [C], shown at the upper part of Fig. 7, a difference spectrum [D] shown at the lower part of Fig. 7, which is the difference spectrum [D] for the measurement sample minus (perfluorobutane plus perfluoropentane plus perfluoropropane plus perfluoroethane), is generated.

[Step 5]
Since the difference spectrum [D] shown in Fig. 7 is generated by subtracting the spectra of the four components from the spectrum of the measurement sample, it shows the infrared absorption spectrum of perfluoromethane, which is remaining. The absorption peak [V'] indicated by an arrow in the difference spectrum [D] corresponds to the absorption peak [V] of the spectrum of perfluoromethane at the quantification wave number 1282 cm⁻¹, shown in Fig. 2. The concentration of perfluoromethane in the measurement sample is quantified from the absorbance w at the absorption peak [IV'] and the calibration curve for perfluoromethane for the absorbance and concentration at a wave number of 1282 cm⁻¹, stored in the memory of the computer 24.

The quantified concentrations of the five components are collectively displayed on the display unit 26 of the computer 24.

In the above embodiment, the quantification of each component and the generation of each difference spectrum performed by the computer 24 in each step have been described with reference to the infrared absorption spectra shown in Fig. 4 to Fig. 7. It is not necessary to show these spectra on the display unit 26 of the computer 24. The infrared absorption spectra used in each step may be displayed. Or, the spectrum of the measurement sample or the difference spectrum generated immediately before, and the difference spectrum obtained by subtracting the spectrum of the component having a prescribed order number may be displayed.

In the above description, the concentrations of the five known components existing in combination in perfluorocarbon are quantified by the difference spectrum method. The automatic and continuous quantitative analysis method and apparatus described above can also be applied in the same way to hydrofluorocarbon shown in Fig. 3, having the eight known components in combination. Table 1 shows the quantification wave numbers corresponding to particular absorption peaks [1] to [8] shown in Fig. 3 as example selected absorption peaks for the eight components.

**Table 1 Quantification Wave Numbers for Eight Components inHydrofluorocarbon**

| Name of Component | Particular Absorption Peak | Quantification Wave Number [cm⁻¹] |
|---|---|---|
| 1,1,1-trifluoroethane | [1] | 1280 |
| 1,1,2,2,3-pentafluoropropane | [2] | 1426 |
| 1,1,1,3,3,3-hexafluoropropane | [3] | 1408 |
| 1,1,3,3,3-pentafluoropropene | [4] | 1388 |
| Tetrafluoropropane | [5] | 1463 |
| 3,3,3-trifluoropropyne | [6] | 1252 |
| 1,1,1,2-tetrafluoroethane | [7] | 1300 |
| Difluoromethane | [8] | 1088 |

An automatic and continuous quantitative analysis method and apparatus according to the present invention can be applied to the quantification of the concentration of each component not only in perfluorocarbon or hydrofluorocarbon, described above, but also in a substance where gases, such as carbon dioxide, nitrogen, and oxygen, are added to perfluorocarbon or hydrofluorocarbon, in a substance where two types of structural isomers of methane, ethane, propane, and butane, which are aliphatic hydrocarbons, are mixed, and in a substance where three types of structural isomers of benzene, toluene, and xylene, which are aromatic hydrocarbons, are mixed. In addition, an automatic and continuous quantitative analysis method and apparatus according to the present invention can be effectively applied to the quantification of the individual concentrations of carbon dioxide, carbon monoxide, nitrogen oxide, and oxygen contained in automobile emissions.

## Claims

1. An automatic and continuous quantitative analysis method for automatically and continuously quantifying the concentration of each component of a plurality of known components constituting a measurement sample in a process of sequentially subtracting an infrared absorption spectrum of each component alone of the plurality of components from an infrared absorption spectrum [S] of the measurement sample to generate difference spectra corresponding to the number of remaining components of the plurality of components, the automatic and continuous quantitative analysis method comprising:
a step of specifying, as a quantification wave number for each component of the plurality of components, a wave number at a tip of one absorption peak that overlaps as little as possible with absorption peaks in infrared absorption spectra of the other components, freely selected as a particular absorption peak for the component, of freely specifying an order for the plurality of components in which the corresponding infrared absorption spectra are subtracted to generate the difference spectra, and of generating a calibration curve for the component for the absorbance and concentration at the quantification wave number;
a step of quantifying the concentration of a component of the plurality of components having the highest order in the measurement sample from an absorbance *a* at an absorption peak corresponding to the quantification wave number of the component having the highest order, in the infrared absorption spectrum [S] of the measurement sample and from the calibration curve for the component having the highest order, and of subtracting from the infrared absorption spectrum [S] of the measurement sample an infrared absorption spectrum for the component having the highest order alone, where an absorbance at the quantification wave number for the component having the highest order is set to have the same intensity as the absorbance *a*, to generate a difference spectrum [A];
a step of quantifying the concentration of a component of the plurality of components having the second highest order in the measurement sample from an absorbance *b* at an absorption peak corresponding to the quantification wave number of the component having the second highest order, in the difference spectrum [A] and from the calibration curve for the component having the second highest order, and of subtracting from the difference spectrum [A] an infrared absorption spectrum for the component having the second highest order alone, where an absorbance at the quantification wave number for the component having the second highest order is set to have the same intensity as the absorbance b, to generate a difference spectrum [B];
a step of repeating, in the same manner as that described above, the quantification of the concentration of a component of the plurality of components having a prescribed highest order in the measurement sample from an absorbance *nᵢ* at an absorption peak corresponding to the quantification wave number of the component having the prescribed highest order, in the difference spectrum [Nᵢ₊₁] generated in the step immediately before and from the calibration curve for the component having the prescribed highest order, and the subtraction, from the difference spectrum [Nᵢ₊₁], of an infrared absorption spectrum for the component having the prescribed highest order alone, where an absorbance at the quantification wave number for the component having the prescribed highest order is set to have the same intensity as the absorbance *nᵢ*, to generate the next difference spectrum [Nᵢ]; and
a step of quantifying the concentration of a component of the plurality of components having the lowest order in the measurement sample from an absorbance w at an absorption peak corresponding to the quantification wave number of the component having the lowest order, in a last remaining difference spectrum and from the calibration curve for the component having the lowest order.

2. An automatic and continuous quantitative analysis method according to Claim 1, wherein the quantified concentration of each component of the plurality of components is collectively displayed or recorded.

3. An automatic and continuous quantitative analysis method according to Claim 1, wherein, in each step of subtracting an infrared absorption spectrum for the component having the prescribed highest order alone from the infrared absorption spectrum of the measurement sample or the difference spectrum generated in the step immediately before to generate a difference spectrum, at least the spectrum before the subtraction and the difference spectrum after the subtraction are displayed or recorded.

4. A Fourier transform infrared spectrophotometer capable of automatically and continuously quantifying the concentration of each component of a plurality of known components included in a measurement sample, the Fourier transform infrared spectrophotometer comprising an analysis section and a data processing section,
the analysis section comprising a light source for emitting an infrared beam; an interference mechanism comprising a beam splitter, a fixed mirror, and a movable mirror; a cell that accommodates the measurement sample or a reference sample and is irradiated with the infrared beam emitted by the light source through the interference mechanism; and a detector,
the data processing section comprising an AD converter; a computer comprising a Fourier transform unit and a memory; and a display unit,
wherein, before quantifying the concentration of each component of the plurality of components, the memory of the computer stores in advance at least an infrared absorption spectrum for each component alone of the plurality of components; a quantification wave number for each component of the plurality of components, specified based on a wave number at a tip of one absorption peak that overlaps as little as possible with absorption peaks in infrared absorption spectra of the other components, freely selected as a particular absorption peak for the component; an order freely specified for the plurality of components in which the corresponding infrared absorption spectra are sequentially subtracted from an infrared absorption spectrum [S] of the measurement sample to generate difference spectra corresponding to the number of remaining components of the plurality of components; and a calibration curve for each component of the plurality of components for the absorbance and concentration at the quantification wave number; and
a program is installed which continuously executes:
a step of quantifying the concentration of a component of the plurality of components having the highest order in the measurement sample from an absorbance *a* at an absorption peak corresponding to the quantification wave number of the component having the highest order, in the infrared absorption spectrum [S] of the measurement sample and from the calibration curve for the component having the highest order, and of subtracting from the infrared absorption spectrum [S] of the measurement sample an infrared absorption spectrum for the component having the highest order alone, where an absorbance at the quantification wave number for the component having the highest order is set to have the same intensity as the absorbance *a*, to generate a difference spectrum [A];
a step of quantifying the concentration of a component of the plurality of components having the second highest order in the measurement sample from an absorbance b at an absorption peak corresponding to the quantification wave number of the component having the second highest order, in the difference spectrum [A] and from the calibration curve for the component having the second highest order, and of subtracting from the difference spectrum [A] an infrared absorption spectrum for the component having the second highest order alone, where an absorbance at the quantification wave number for the component having the second highest order is set to have the same intensity as the absorbance b, to generate a difference spectrum [B];
a step of repeating, in the same manner as that described above, the quantification of the concentration of a component of the plurality of components having a prescribed highest order in the measurement sample from an absorbance *nᵢ* at an absorption peak corresponding to the quantification wave number of the component having the prescribed highest order, in the difference spectrum [Nᵢ₊₁] generated in the step immediately before and from the calibration curve for the component having the prescribed highest order, and the subtraction, from the difference spectrum [Nᵢ₊₁], of an infrared absorption spectrum for the component having the prescribed highest order alone, where an absorbance at the quantification wave number for the component having the prescribed highest order is set to have the same intensity as the absorbance *nᵢ*, to generate a difference spectrum [Nᵢ]; and
a step of quantifying the concentration of a component of the plurality of components having the lowest order in the measurement sample from an absorbance w at an absorption peak corresponding to the quantification wave number of the component having the lowest order, in a last remaining difference spectrum and from the calibration curve for the component having the lowest order.

5. A Fourier transform infrared spectrophotometer according to Claim 4,
wherein the quantified concentration of each component of the plurality of components is collectively displayed on the display unit.

6. A Fourier transform infrared spectrophotometer according to Claim 4,
wherein, in each step of subtracting the infrared absorption spectrum for the component having a prescribed highest order alone from the infrared absorption spectrum of the measurement sample or the difference spectrum generated in the step immediately before to generate a difference spectrum, at least the spectrum before the subtraction and the difference spectrum after the subtraction are displayed on the display unit.
